# EUROPÄISCHE PATENTSCHRIFT

(11) **EP 4 061 193 B1**
(45) Veröffentlichungstag und Bekanntmachung des Hinweises auf die Patenterteilung: **22.05.2024**
(21) Anmeldenummer: 20804528.6
(22) Anmeldetag: 11.11.2020
(51) Int. Cl.: A47L 9/14

(54) **VORRICHTUNG UND VERFAHREN ZUM EINBRINGEN VON ÖFFNUNGEN IN EINEN ENTSORGUNGSBEUTEL FÜR EINE STAUBSAUGVORRICHTUNG, SOWIE STAUBSAUGVORRICHTUNG**
DEVICE AND METHOD FOR MAKING OPENINGS IN A DISPOSAL BAG FOR A VACUUM CLEANER, AND VACUUM CLEANER
DISPOSITIF ET PROCEDE POUR FAIRE DES OUVERTURES DANS UN SAC D'EVACUATION POUR UN ASPIRATEUR, ET ASPIRATEUR

(30) Priorität: 21.11.2019 EP 19210540
(43) Veröffentlichungstag der Anmeldung: 28.09.2022
(73) Patentinhaber: Hilti Aktiengesellschaft, 9494 Schaan (LI)
(72) Erfinder: HANSLMEIER, Xaver, 87665 Mauerstettten (DE); SEVER, Eduard, 6713 Ludesch (AT); BASALLA, Felix, 72224 Ebhausen (DE)
(74) Vertreter: Hilti Aktiengesellschaft Corporate Intellectual Property
(86) Internationale Anmeldenummer: PCT/EP2020/081707
(87) Internationale Veröffentlichungsnummer: WO 2021/099188

(56) Entgegenhaltungen:
- WO-A1-97/12537
- DE-U1-202004 012 910
- US-A1- 2005 076 624

## Beschreibung

Die vorliegende Erfindung betrifft eine Vorrichtung zum Einbringen von Öffnungen in einen Entsorgungsbeutel für eine Staubsaugvorrichtung, wobei die Staubsaugvorrichtung einen Saugerkopf und einen Sammelbehälter aufweist. Die Vorrichtung ist dadurch gekennzeichnet, dass sie zueinander korrespondierend ausgestaltete Komponenten umfasst, wobei die zueinander korrespondierend ausgestalteten Komponenten der Vorrichtung eine offene Struktur umfassen, wobei die offene Struktur dazu eingerichtet ist, einen Druckausgleich zwischen einem ersten Bereich und einem zweiten Bereich des Sammelbehälters zu bewirken. Es ist im Sinne der Erfindung bevorzugt, dass die vorgeschlagene Vorrichtung einen Stempel und eine Matrize umfasst, wobei der Stempel in dem Saugerkopf und die Matrize in dem Sammelbehälter angeordnet vorliegt. In einem zweiten Aspekt betrifft die Erfindung eine Staubsaugvorrichtung, die mindestens eine vorgeschlagene Vorrichtung umfasst. In einem weiteren Aspekt betrifft die Erfindung ein Verfahren zum Einbringen von Öffnungen in einen Entsorgungsbeutel für eine Staubsaugvorrichtung.

### Hintergrund der Erfindung:

Es sind im Stand der Technik verschiedene Arten von Staubsaugern bekannt, mit denen in verschiedenen Anwendungsbereichen Staub aufgesagt werden kann. Einige dieser Staubsaugertypen verwenden sogenannte Staubsaugerbeutel als Entsorgungsbeutel für den aufgesagten Staub. Häufig werden diese Entsorgungsbeutel in einen Innenraum des Staubsaugers eingelegt und während des Betriebs des Staubsaugers mit Staub gefüllt. Wenn der Entsorgungsbeutel voll ist, muss er durch einen frischen, d.h. leeren Beutel ersetzt werden. Dazu wird der volle Beutel aus dem Staubsauger entnommen und einer passenden Entsorgung zugeführt.

Auch in sogenannten Bausaugern, die beispielsweise auf Baustellen eingesetzt werden, werden Entsorgungsbeutel verwendet, um den eingesaugten Staub zu sammeln und später zu entsorgen. Der eingesaugte Staub kann im Sinne der Erfindung auch als Saugmedium bezeichnet werden. Der Entsorgungsbeutel ist dabei vorzugsweise herausnehmbar, d.h. austauschbar ausgebildet. Er kann darüber hinaus verschlossen werden, um ein Entweichen des Staubmediums zu verhindern. Dadurch werden die Umwelt und ein Nutzer des Bausaugers vor einer gesundheitlichen Belastung durch den Staub bzw. das Staubmedium geschützt.

Konventionelle Bausauger, wie sie aus dem Stand der Technik bekannt sind, bestehen üblicherweise aus einem unteren Bereich, der häufig einen Staubsammelbehälter umfasst, in den der Entsorgungsbeutel eingelegt werden kann. In einem oberen Bereich umfassen Bausauger in einigen Ausführungsformen einen Saugerkopf, der auf den unteren Bereich des Saugers aufgesetzt werden kann. Saugerkopf und unterer Bereich eines solchen Bausaugers können beispielsweise separat voneinander vorliegen und aufeinander aufgesetzt werden. Der Bausauger kann aber auch so gebildet sein, dass der Saugerkopf auf den unteren Bereich des Saugers geklappt werden kann. In diesen Fällen können der Saugerkopf und der Sammelbehälter beispielsweise über ein Scharnier oder ein Gelenk miteinander verbunden vorliegen.

Üblicherweise werden bei konventionellen Bausaugern die Entsorgungsbeutel in den Sammelbehälter des Saugers hineingelegt, wobei häufig auch ein Rand des Sammelbehälters überdeckt wird. Dadurch wird der Beutel beim Verschließen des Bausaugers in dem Sammelbehälter fixiert und luftdicht verschlossen. Das Verschließen des Bausaugers kann beispielsweise dadurch erfolgen, dass der Saugerkopf auf den Sammelbehälter geklappt wird oder dadurch, dass der Saugerkopf auf den Sammelbehälter aufgesetzt wird.

Eine Möglichkeit, das Staubmedium durch einen Bausauger einzusaugen, besteht darin, in dem Bausauger einen Unterdruck zu erzeugen, der dafür verwendet wird, Staub in den Staubsammelbehälter einzusaugen. Der Unterdruck kann beispielsweise von einer Turbine erzeugt werden, die von einem Motor betrieben wird. Durch den Unterdruck, der sich insbesondere auch im Staubsammelbehälter des Bausaugers ausbildet, kann es allerdings passieren, dass der Entsorgungsbeutel, der üblicherweise aus einem flexiblen, dünnen Kunststoffmaterial besteht, in Richtung der Turbine des Saugers bewegt bzw. gezogen wird. Dadurch kann der Saugprozess des Bausaugers negativ beeinflusst bzw. beeinträchtigt werden.

Um diese unerwünschte Bewegung des Beutels zu verhindern, sind kostenintensive Spezial-Entsorgungsbeutel entwickelt worden, die das unerwünschte Ansaugen des Beutels durch die Turbine unterbinden. Diese Spezial-Entsorgungsbeutel weisen eingestanzte Öffnungen auf, die es ermöglichen, dass sich in dem Beutel kein Unterdruck ausbildet. Die Öffnungen können je nach Schutzklasse des Saugers, in dem sie verwendet werden, mit einem Vlies bedeckt sein, um ein Entweichen des Staubmediums zu verhindern. Die Verwendung dieser Spezial-Entsorgungsbeutel ist allerdings mit hohen Verbrauchskosten verbunden, die beispielsweise dazu führen können, dass ein Austausch des Beutels sehr lange hinausgezögert wird. Dies kann sich aber nachteilig auf die Funktionsfähigkeit oder die Lebenszeit des Saugers auswirken.

Beispielsweise offenbart die DE 20 2004 012 910 U1 ein Sauggerät, insbesondere für Staub, wobei eine verschliessbare Luftdurchtrittsöffnung zwischen den Innen- und Aussenseiten eines Entsorgungsbeutels vorgesehen ist, um einen Druckausgleich herbeizuführen.

In der WO 97 12 537 A1 wir ein Staubsauger mit einem wasserdichten Abfallbeutel beschrieben, wobei der wasserdichte Beutel vorgesehen ist, unabhängig von einer Einrichtung in den Tank des Staubsaugers eingebracht zu werden.

Die US 2005 076 624 A1 offenbart einen Industriestaubsauger, wobei staubbeladene Luft von dem Industriestaubsauger eingesaugt und in einem Staubsammelbeutel gesammelt werden kann.

Die Aufgabe, die der vorliegenden Erfindung zugrunde liegt, besteht darin, die vorstehend beschriebenen Nachteile und Mängel des Standes der Technik zu überwinden und eine Vorrichtung und ein Verfahren bereitzustellen, mit der verhindert werden kann, dass sich der Entsorgungsbeutel in Richtung der unterdruckerzeugenden Turbine bewegt und diese in ihrer Arbeit behindert. Insbesondere soll es die bereitzustellende Vorrichtung ermöglichen, dass kostengünstige Standard-Entsorgungsbeutel verwendet werden können, so dass vorteilhafterweise die Betriebs- und Verbrauchskosten für den Einsatz einer ebenfalls bereitzustellenden Staubsaugvorrichtung wesentlich reduziert werden können. Darüber hinaus soll ein Verfahren zum Betrieb einer Staubsaugvorrichtung mit Standard-Entsorgungsbeuteln angegeben werden, mit dem die oben beschriebenen Nachteile überwunden werden können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zum Einbringen von Öffnungen in einen Entsorgungsbeutel für eine Staubsaugvorrichtung vorgesehen, wobei die Staubsaugvorrichtung einen Saugerkopf und einen Sammelbehälter aufweist. Die Vorrichtung ist dadurch gekennzeichnet, dass sie zueinander korrespondierend ausgestaltete Komponenten umfasst, wobei die zueinander korrespondierend ausgestalteten Komponenten der Vorrichtung eine offene Struktur umfassen, wobei die offene Struktur dazu eingerichtet ist, einen Druckausgleich zwischen einem ersten Bereich und einem zweiten Bereich des Sammelbehälters zu bewirken. Die Vorrichtung kann im Sinne der Erfindung bevorzugt auch als Stanzvorrichtung bezeichnet werden. Durch die Vorsehung der Stanzvorrichtung kann vorteilhafterweise ein Druckausgleich innerhalb des Sammelbehälters der Staubsaugvorrichtung bzw. zwischen dem Inneren des Entsorgungsbeutels und dem umgebenden Innenraum des Sammelbehälters ermöglicht werden, so dass ein Ansaugen des Beutels an die Turbine wirksam verhindert wird. Der Druckausgleich wird vorzugsweise dadurch ermöglicht, dass die Stanzvorrichtung beim Schließen der Staubsaugvorrichtung Öffnungen bzw. Löcher in den Entsorgungsbeutel einbringt, wobei durch diese Öffnungen oder Löcher ein Druckausgleich zwischen dem Innenbereich des Beutels und dem umgebenden Innenraum des Sammelbehälters erfolgt. Dadurch können in der Staubsaugvorrichtung normale, kostengünstige Staubsaugerbeutel als Entsorgungsbeutel verwendet werden, wobei diese kostengünstigen Staubsaugerbeutel im Sinne der Erfindung vorzugsweise auch als Standard-Entsorgungsbeutel bezeichnet werden. Diese Standard-Entsorgungsbeutel weisen zunächst vor ihrer Benutzung keine vorgestanzten Öffnungen auf. Sie werden dann in die geöffnete Staubsaugvorrichtung eingelegt, wobei der Beutel insbesondere in den unteren Bereich der Staubsaugvorrichtung, der vorzugsweise den Sammelbehälter umfasst, eingelegt wird. Wenn die Staubsaugvorrichtung dann geschlossen wird, senkt sich der Stempel der Stanzvorrichtung, der im Saugerkopf der Staubsaugvorrichtung vorliegt, in die Matrize der Stanzvorrichtung, die im unteren Bereich der Staubsaugvorrichtung angeordnet ist. Durch das Schließen der Staubsaugvorrichtung wird das Material des Entsorgungsbeutels über der Matrize gespannt und vom Stempel durchstochen bzw. durchstanzt. Die so erhaltenen Löcher im Material des Entsorgungsbeutels werden im Sinne der Erfindung vorzugsweise als Öffnungen bezeichnet. Mit anderen Worten ist es im Sinne der Erfindung bevorzugt, dass die Vorrichtung dazu eingerichtet ist, beim Aufsetzen des Saugerkopfes auf den Sammelbehälter Öffnungen in den Entsorgungsbeutel einzubringen, wobei die Öffnungen ein Ansaugen des Entsorgungsbeutels durch den von der Turbine erzeugten Unterdruck besonders effektiv verhindern.

Es ist im Sinne der Erfindung bevorzugt, dass die vorgeschlagenen Stanzvorrichtung einen Stempel und eine Matrize als zueinander korrespondierend ausgestaltete Komponenten umfasst, wobei der Stempel in dem Saugerkopf und die Matrize in dem Sammelbehälter angeordnet vorliegt. Mit anderen Worten können die zueinander korrespondierend ausgestalteten Komponenten der vorgeschlagenen Stanzvorrichtung im Sinne der Erfindung bevorzugt auch als Stempel und Matrize bezeichnet werden, wobei der Stempel und die Matrize dazu eingerichtet sind, Öffnungen in einen Entsorgungsbeutel, der in einem Sammelbehälter in einer Staubsaugvorrichtung eingelegt werden kann, einzubringen. Das Einbringen erfolgt vorzugsweise durch einen Stanzvorgang, der vorzugsweise durch ein Zusammenwirken der zueinander korrespondierend ausgebildeten Komponenten der Stanzvorrichtung bewirkt wird.

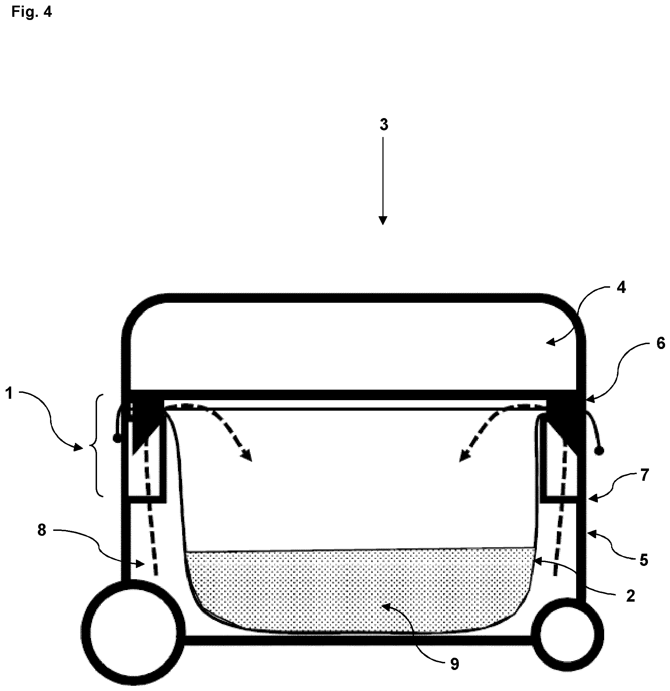

Es ist im Kontext der Erfindung vorgesehen, dass die Stanzvorrichtung eine offene Struktur umfasst, wobei die offene Struktur dazu eingerichtet ist, einen Druckausgleich zwischen einem ersten Bereich und einem zweiten Bereich des Sammelbehälters zu bewirken bzw. zu ermöglichen. Mit anderen Worten bedeutet die Formulierung "offene Struktur", dass eine solche Struktur einen Druckausgleich zwischen zwei Raumbereichen mit unterschiedlichen Drücken oder Druckbedingungen innerhalb der Staubsaugvorrichtung ermöglicht. Diese Raumbereiche mit unterschiedlichen Druckbedingungen werden im Sinne der Erfindung bevorzugt als erster und zweiter Bereich bezeichnet. Vorzugsweise liegt insbesondere eine fluidwirksame Verbindung zwischen dem ersten und dem zweiten Bereich der Staubsaugvorrichtung vor. Der Begriff "fluidwirksame Verbindung" bedeutet im Sinne der Erfindung bevorzugt, dass ein Fluidaustausch zwischen dem ersten und dem zweiten Bereich erfolgen kann. Vorzugsweise handelt es sich bei dem auszutauschenden Fluid um ein Gas oder eine Gasmischung, insbesondere um das in der Atmosphäre vorkommende Gasgemisch, das im Wesentlichen Sauerstoff (02) und Stickstoff (N2), sowie geringen Mengen weitere Gase und Gasgemische aufweist ("Luft"). Der Druckausgleich wird in Fig. 4 durch den gestrichelten Pfeil symbolisiert.

Vorzugsweise wird der erste Bereich zwischen einer Wand des Sammelbehälters und dem Entsorgungsbeutel gebildet, während der zweite Bereich dem Innenraum des Entsorgungsbeutels entspricht. Es ist im Sinne der Erfindung bevorzugt, dass sich im unteren Bereich der Staubsaugvorrichtung im Saugbetrieb unterschiedliche Druckbereiche ausbilden, die im Sinne der Erfindung bevorzugt als erster und zweiter Bereich bezeichnet werden. Es ist im Sinne der Erfindung ferner bevorzugt, dass bei Betrieb der Saugvorrichtung in dem ersten Bereich ein Atmosphärendruck vorliegt und in dem zweiten Bereich ein Unterdruck. Der Unterdruck im zweiten Bereich ist ursächlich für das unerwünschte Ansaugen des Entsorgungsbeutels durch die unterdruckerzeugende Turbine. Durch die Öffnungen, die durch die Stanzvorrichtung beim Schließen der Staubsaugvorrichtung erzeugt werden, kann ein Druckausgleich zwischen den beiden unterschiedlichen Druckbereichen erfolgen, so dass der Entsorgungsbeutel nicht mehr von der Turbine angesaugt wird.

Der Begriff "Atmosphärendruck" stellt für den Fachmann keinen unklaren Begriff dar, denn der Fachmann weiß, dass mit dem Begriff der üblicherweise in der Atmosphäre vorliegende Luftdruck bezeichnet wird. Es handelt sich dabei um den hydrostatischen Druck der Luft, der normgemäß bei 1013,25 hPa liegt. Der Fachmann weiß somit, dass der Begriff "Atmosphärendruck" einen Luftdruckwert in diesem Bereich bezeichnet. Der Begriff "Unterdruck" bezeichnet im Sinne der Erfindung bevorzugt einen Wert, der kleiner ist als der Atmosphärendruck. Der Druckunterschied, der sich bei Betrieb der Staubsaugvorrichtung im Sammelbehälter ausgebildet, stellt vorzugsweise die Differenz zwischen dem durch die Turbine erzeugten Unterdruck zum Einsaugen des Staubmediums und dem aktuell vorherrschenden Atmosphärendruck dar. Dabei liegt der Unterdruck vorzugsweise im zweiten Bereich im Inneren des Entsorgungsbeutels vor und der Atmosphärendruck im ersten Bereich zwischen einer Innenwand des Sammelbehälters und einer Außenwand des Entsorgungsbeutels. Der Ausgleich dieses Druckunterschieds wird im Sinne der Erfindung bevorzugt als Druckausgleich bezeichnet. Mit der vorgeschlagenen Erfindung kann somit vorteilhafterweise eine Möglichkeit bereitgestellt werden, einen Druckausgleich zwischen den Sammelbehälterbereichen mit den unterschiedlichen Druckwerten zu bewirken. Dadurch kann vorteilhafterweise auf den Einsatz kostenintensiver Spezial-Entsorgungsbeutel verzichtet werden und der Betrieb der Staubsaugvorrichtung kann kostengünstiger gestaltet werden.

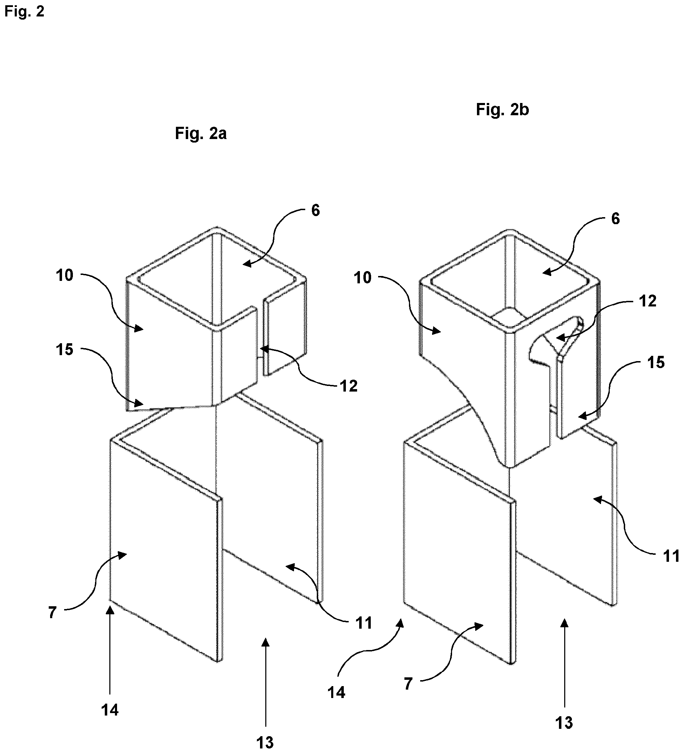

Es ist im Sinne der Erfindung bevorzugt, dass der Stempel der vorgeschlagenen Stanzvorrichtung mindestens eine Öffnung aufweist. Es ist im Sinne der Erfindung ganz besonders bevorzugt, dass die Öffnung auf der Vorderseite des Stempels angeordnet vorliegt. Bei dieser Öffnung kann es sich beispielsweise um einen Spalt handeln. Vorzugsweise kann der Spalt durchgehend ausgebildet sein und die Vorderseite des Stempels in zwei voneinander getrennte Teile trennen (vgl. Fig. 2a). Der Spalt kann aber auch nicht-durchgehend ausgebildet sein, wie in Fig. 2b dargestellt. Es versteht sich, dass die verschiedenen Merkmale der Ausführungsbeispiele der Erfindung, die in den Figuren 2a und 2b gezeigt werden, beliebig miteinander kombiniert werden können. Dies betrifft insbesondere die Position des tiefsten Punktes des Stempels, wenn der Stempel keilförmig ausgebildet ist, sowie die Ausgestaltung der Öffnung auf der Vorderseite des Stempels. Der Spalt trägt vorzugsweise zur Bildung der offenen Struktur der Stanzvorrichtung bei und ermöglicht den Druckausgleich zwischen dem ersten und dem zweiten Bereich innerhalb des Sammelbehälters bzw. innerhalb des unteren Bereichs der Staubsaugvorrichtung.

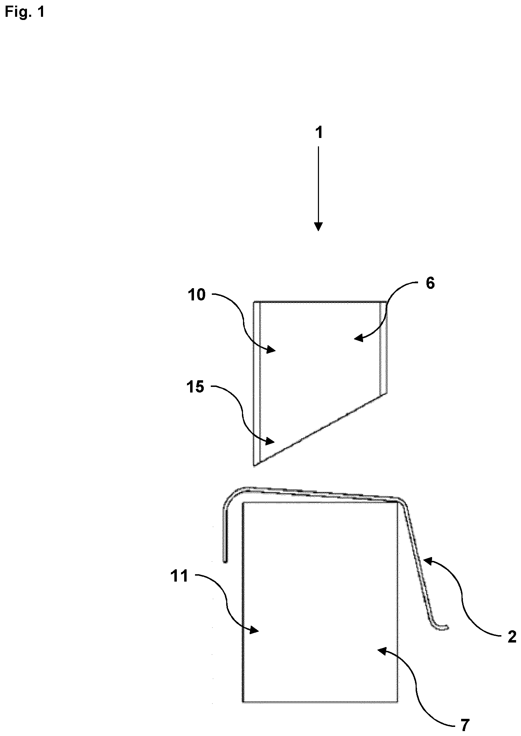

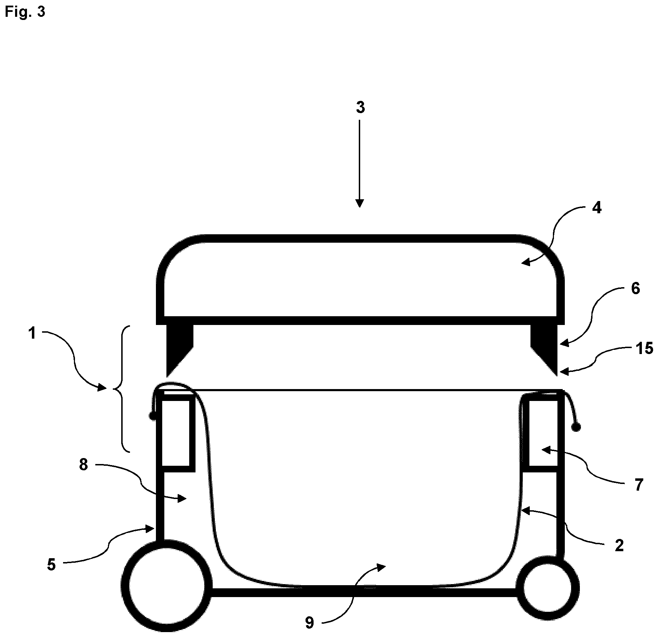

Es ist im Sinne der Erfindung bevorzugt, dass die Matrize eine rechteckige Grundform aufweist und von einem Hohlzylinder gebildet wird, der auf einer der vier Seiten offen ist. Vorzugsweise ist die Matrize zu der Seite offen ausgebildet, die in Richtung des Innenraumes des Sammelbehälters bzw. in den Innenraum des Entsorgungsbeutels zeigt. Dadurch wird vorzugsweise die offene Struktur der Stanzvorrichtung geschaffen, die den Druckausgleich zwischen dem ersten und dem zweiten Bereich im Sammelbehälter der Staubsaugvorrichtung ermöglicht. Die rechteckige Grundform der Matrize wird in den Figuren 1, 2a und 2b ersichtlich. Es ist im Sinne der Erfindung insbesondere bevorzugt, dass die Matrize ihre rechteckige Grundform in einer Draufsicht aufweist. Die Draufsicht ergibt sich vorzugsweise dadurch, dass ein Betrachter von oben auf die Staubsaugvorrichtung schaut. Die Raumrichtung "oben" oder "von oben" wird im Sinne der Erfindung bevorzugt durch die Anordnung des Saugerkopfes festgelegt, während die Raumrichtung "unten" oder "von unten" durch den Erdboden oder beispielsweise durch die Anordnung von Rädern der Staubsaugvorrichtung (vgl. Fig. 3 oder 4) festgelegt wird. Dementsprechend bildet der Saugerkopf die Oberseite der Staubsaugvorrichtung, während die dem Erdboden zugewandte Außenwand des Sammelbehälters die Unterseite der Staubsaugvorrichtung bildet.

Es ist im Sinne der Erfindung bevorzugt, dass die Matrize und/oder der Stempel eine im Wesentlichen halbkreisförmige Grundform aufweist. Das bedeutet im Sinne der Erfindung bevorzugt, dass die Matrize und/oder der Stempel eine im Wesentlichen ebene bzw. plane Seitenwand aufweist, sowie eine zweite Seitenwand, die im Wesentlichen einen halben Hohlzylinder mit kreisförmiger Grundfläche umfasst bzw. von einem solchen gebildet wird. Tests haben gezeigt, dass Matrizen und/oder Stempel mit einer im Wesentlichen halbkreisförmige Grundform eine besonders gute Dichtung ermöglichen, so dass die Durchführung eines Druckausgleichs mit der vorgeschlagenen Stanzvorrichtung weiter erleichtert wird.

Der Stempel kann auch als Doppel- oder Mehrfachstempel ausgebildet sein. Das bedeutet im Sinne der Erfindung bevorzugt, dass zwei oder mehrere kleinere Stempel vorzugsweise nebeneinander oder in räumlicher Nähe zueinander angeordnet sein können. Vorzugsweise sind in dieser bevorzugten Ausführungsform der Erfindung die Matrizen als Doppel- oder Mehrfachmatrizen ausgebildet. Eine Doppel- oder Mehrfachmatrize kann beispielsweise Matrizenrippen umfassen, die die Aufnahmen für die einzelnen Stempel voneinander trennen. Die Stempel können beispielsweise eine halbkreisförmige Grundfläche aufweisen und ein abgeschrägtes unteres Ende zum Einfahren in die Matrize und zum Erzeugen des Loches in Staubsaugerbeutel.

Es ist im Sinne der Erfindung bevorzugt, dass die Seite der Matrize, die in Richtung des Innenraumes des Sammelbehälters zeigt, als Vorderseite der Matrize bezeichnet wird. Dabei handelt es sich vorzugsweise um die offene Seite des Hohlzylinders, der bevorzugt die Matrize bildet. Es ist im Sinne der Erfindung bevorzugt, dass die der Vorderseite gegenüberliegende Seite der Matrize als deren Rückseite betrachtet wird. Dabei handelt es sich vorzugsweise um die Seite der vorzugsweise hohlzylinderförmig ausgebildeten Matrize, die an einer Innenseite des Sammelbehälters der Staubsaugvorrichtung anliegt. Mit anderen Worten tragen vorzugsweise sowohl der Stempel mit seiner bevorzugt auf der Vorderseite angeordneten Öffnung, als auch die Matrize, die vorzugsweise einen Hohlzylinder mit rechteckiger Grundfläche umfasst, wobei eine Seite des Hohlzylinders fehlt, zur Bildung der offenen Struktur der Stanzvorrichtung bei. Vorzugsweise ermöglichen der Stempel und die Matrize durch ihre bevorzugte, mit Öffnungen versehene Ausgestaltung den Druckausgleich zwischen dem ersten und dem zweiten Bereich innerhalb des Staubsaugvorrichtungs-Unterteils.

Analog zur Matrize können auch zwei sich gegenüberliegende Seiten des Stempels als Vorder- oder Rückseite bezeichnet werden. Dies bedeutet im Sinne der Erfindung bevorzugt, dass eine Vorderseite des Stempels dem Innenraum des Sammelbehälters zugewandt vorliegt, während eine Rückseite des Stempels in Richtung einer Seitenwand des Sammelbehälters orientiert ist. Diese Orientierung ergibt sich insbesondere im geschlossenen Zustand der Staubsaugvorrichtung, in dem der Saugerkopf auf dem Sammelbehälter der Staubsaugvorrichtung aufgesetzt vorliegt. Ein offener Zustand der Staubsaugvorrichtung liegt dementsprechend vor, wenn der Saugerkopf nicht auf dem Sammelbehälter bzw. auf dem unteren Teil der Staubsaugvorrichtung befestigt vorliegt. Es ist im Sinne der Erfindung bevorzugt, dass der tiefste Punkt des vorzugsweise keilförmig ausgebildeten Stempels im Bereich der Vorderseite oder im Bereich der Rückseite angeordnet liegen kann.

Es ist im Sinne der Erfindung bevorzugt, dass der Stempel eine rechteckige Grundform aufweist. Es ist im Sinne der Erfindung insbesondere bevorzugt, dass der Stempel die rechteckige Grundform in einer Draufsicht aufweist. Diese rechteckige Grundform des Stempels wird in den Figu-ren 1, 2a und 2b ersichtlich. Der Fachmann weiß, dass eine rechteckige Grundform eine quadratisch ausgebildete Grundfläche einschließen kann, wobei eine rechteckige Grundfläche im Wesentlichen dadurch gekennzeichnet ist, dass die Grundfläche vier Seiten aufweist, wobei jede Seite an ihren Enden mit zwei anderen Seiten einen im Wesentlichen rechten Winkel einschließt. Zwei gegenüberliegenden Seiten einer rechteckigen Grundfläche sind im Wesentlichen gleich lang. Der Begriff "rechteckige Grundfläche" schließt nicht aus, dass die Kanten des Hohlzylinders abgerundet ausgebildet sein können.

Es ist im Sinne der Erfindung bevorzugt, dass der Stempel von einem Hohlzylinder gebildet wird, der in einem unteren Bereich keilförmig ausgebildet sein kann. Der tiefste Punkt des Keils kann dabei im Bereich der offenen Seite der vorzugsweise hohlzylinderförmig ausgebildeten Matrize angeordnet vorliegen (vgl. Fig. 2b). Es kann aber im Sinne der Erfindung auch bevorzugt sein, dass der tiefste Punkt des Keils auf der Seite angeordnet ist, der der offenen Seite der vorzugsweise hohlzylinderförmig ausgebildeten Matrize gegenüberliegt (vgl. Fig. 2a). Vorzugsweise kann durch die Lage und Anordnung des tiefsten Punkt des Keils die Position der Öffnung im Entsorgungsbeutel eingestellt bzw. variiert werden. Es kann im Sinne der Erfindung auch bevorzugt sein, dass der Stempel nicht keilförmig, sondern in Form einer Spitze ausgebildet ist oder eine Spitze umfasst. Dadurch können besonders kleine Öffnungen in den Entsorgungsbeutel eingestanzt werden. Kleine Öffnungen sorgen vorzugsweise dafür, dass der Druckausgleich zwischen den beiden unterschiedlichen Druckbereichen innerhalb des Sammelbehälters der Staubsaugvorrichtung in einem beschränkten Umfang erfolgt, so dass der Unterdruck innerhalb des Sammelbehälters nur wenig beeinträchtigt wird. Außerdem führen die kleinen Öffnungen dazu, dass besonders wenig Staub aus dem Inneren des Sammelbehälters bzw. aus dem Inneren des Entsorgungsbeutels in die Umgebung der Staubsaugvorrichtung gelangen kann. Dies ist besonders vorteilhaft bei gesundheitsgefährdenden Staubmaterialien, wie zum Beispiel toxischen oder krebserregenden Materialien.

Es kann im Sinne der Erfindung bevorzugt sein, dass die Entsorgungsbeutel an den Stellen, an denen die Öffnungen eingebracht werden, verstärkt sind, um ein Zerreißen des Entsorgungsbeutels zu vermeiden. Ein unerwünschtes Zerreißen des Entsorgungsbeutels über das Einbringen der Öffnungen hinaus würde den Entsorgungsbeutel unbrauchbar machen. Die Verstärkung kann beispielsweise durch dasselbe Material erfolgen, aus dem der Entsorgungsbeutel hergestellt ist. Es kann im Sinne der Erfindung allerdings auch bevorzugt sein, dass der Entsorgungsbeutel an den Stellen, an denen die Öffnungen eingebracht werden, mit einem Vliesmaterial verstärkt sind. Durch die Vorsehung eines Vliesmaterials wird die Gefahr eines unerwünschten Einreißens des Entsorgungsbeutels weiter verringert. Ferner kann sich das Vliesmaterial nach dem Stanzvorgang zumindest teilweise über die entstandene Öffnung legen und so verhindern, dass Staub aus dem Entsorgungsbeutel in die Umgebung entweicht. Vorzugsweise behindert eine Verstärkung aus Vliesmaterial den Druckausgleich zwischen den unterschiedlichen Druckbereich im unteren Bereich der Staubsaugvorrichtung nicht. Darüber erschwert die Vorsehung des Vliesmaterials vorteilhafterweise auch das Durchstechen des Entsorgungsbeutels nicht, da es bedingt durch seine Struktur leicht zu durchtrennen ist.

Es ist im Sinne der Erfindung bevorzugt, dass der Stempel in einem unteren Bereich geschärfte Kanten aufweist, um besonders einfach das Material des Entsorgungsbeutels zu durchdringen und auf diese Weise die Öffnungen für den Druckausgleich zwischen den beiden unterschiedlichen Druckbereichen zu ermöglichen. Es ist im Sinne der Erfindung darüber hinaus bevorzugt, dass die Kanten einen geraden Verlauf aufweisen (vgl. Fig. 2a) und dadurch beispielsweise einen Keil bilden. Es kann im Sinne der Erfindung aber auch bevorzugt sein, dass die unteren Kanten des Stempels gebogen ausgebildet sind oder eine Krümmung aufweisen (vgl. Fig. 2b). Tests haben gezeigt, dass dadurch besonders glattrandige Öffnungen gestanzt werden können. Im Kontext der vorliegenden Erfindung kann der Stempel der vorgeschlagenen Stanzvorrichtung auch in dem Sammelbehälter und die Matrize in dem Saugerkopf angeordnet vorliegen. Mit anderen Worten ist die Anordnung von Stempel und Matrize in Bezug auf den Sammelbehälter und den Saugerkopf genau umgekehrt ausgebildet zu den bisher beschriebenen Ausführungsformen der Erfindung.

In einem zweiten Aspekt betrifft die Erfindung eine Staubsaugvorrichtung, die dadurch gekennzeichnet ist, dass sie mindestens eine vorgeschlagene Stanzvorrichtung umfasst. Es ist im Sinne der Erfindung bevorzugt, dass die Staubsaugvorrichtung eine oder mehrere vorgeschlagene Vorrichtungen aufweisen kann. Beispielsweise können zwei Vorrichtungen auf sich gegenüberliegenden Seiten der Staubsaugvorrichtung angeordnet vorliegen. Dadurch werden vorteilhafterweise mehr als eine Öffnung in den Entsorgungsbeutel eingebracht und der Druckausgleich zwischen dem ersten und dem zweiten Bereich innerhalb des Sammelbehälters der Staubsaugvorrichtung kann weiter verbessert werden. Insbesondere kann durch die Vorsehung von mehr als einer Stanzvorrichtung ein räumlich besonders homogener Druckausgleich bewirkt werden. Es kann im Sinne der Erfindung ferner bevorzugt sein, dass Stanzvorrichtungen umlaufend über den Umfang des Saugerkopfes bzw. des Sammelbehälters angeordnet vorliegen. Die Stempel und Matrizen der Stanzvorrichtungen können unterschiedliche Größen aufweisen, so dass eine Anzahl und eine Größe der erzeugten Öffnungen aufeinander abgestimmt werden kann. Beispielsweise können weniger Stanzvorrichtungen vorgesehen sein, wenn jede Stanzvorrichtung ein relativ großes Stanzloch erzeugt. Analog kann es bevorzugt sein, dass viele Stanzvorrichtungen vorgesehen sind, wobei jede Stanzvorrichtung ein relativ kleines Stanzloch erzeugt. Vorzugsweise ist die Gesamtgröße der Öffnungen im Entsorgungsbeutel so groß, dass ein unkomplizierter Druckausgleich zwischen dem ersten und dem zweiten Bereich sichergestellt werden kann.

Es ist im Sinne der Erfindung bevorzugt, dass die Stempel und die Matrizen zueinander korrespondierend ausgebildet sind. Das betrifft insbesondere die Dimensionen von Stempel und Matrizen. Es ist im Sinne der Erfindung bevorzugt, dass die aufnehmenden Matrizen in Bezug auf die Dimensionen etwas größer ausgebildet sind als die Stempel, so dass die Stempel besonders leicht in die Matrizen einfahren bzw. hineingleiten können. Eine Länge der Stempel und/oder Matrizen kann beispielsweise in einem Bereich von 10 bis 20 mm liegen, vorzugsweise bei ca. 15 mm. Eine Breite der Stempel und/oder Matrizen kann beispielsweise in einem Bereich von 25 bis 45 mm liegen, vorzugsweise in einem Bereich von 30 bis 40 mm und besonders bevorzugt bei ca. 35 mm. Eine Höhe der Stempel und/oder Matrizen kann beispielsweise in einem Bereich von 30 bis 50 mm liegen, vorzugsweise in einem Bereich von 35 bis 45 mm und besonders bevorzugt bei ca. 40 mm. Diese Dimensionen von Stempel und/oder Matrizen haben in Tests zu besonders gleichmäßigen Öffnungen geführt, die besonders gut geeignet waren, einen Druckausgleich zwischen dem ersten und dem zweiten Bereich innerhalb des Sammelbehälters der Staubsaugvorrichtung herbeizuführen.

In einem zweiten Aspekt betrifft die Erfindung ein Verfahren zum Einbringen von Öffnungen in einen Entsorgungsbeutel für eine Staubsaugvorrichtung. Das Verfahren ist durch die folgenden Schritte gekennzeichnet:
a) Bereitstellung einer Staubsaugvorrichtung, wobei die Staubsaugvorrichtung einen Saugerkopf und einen Sammelbehälter aufweist, sowie eine vorgeschlagene Stanzvorrichtung,
b) Einlegen eines Entsorgungsbeutels in den Sammelbehälter der Staubsaugvorrichtung,
c) Schließen der Staubsaugvorrichtung,
d) Einbringen der Öffnungen in den Entsorgungsbeutel durch Zusammenführen des Stempels und der Matrize.

Es ist im Sinne der Erfindung insbesondere bevorzugt, dass bei dem vorgeschlagenen Verfahren durch die Verwendung der vorgeschlagenen Stanzvorrichtung Standard-Entsorgungsbeutel verwendet werden können, die vom Nutzer der Staubvorrichtung kostengünstig erworben werden können. Diese Standard-Entsorgungsbeutel werden in den Sammelbehälter der Staubsaugvorrichtung eingelegt und die Staubsaugvorrichtung durch das Zusammenbringen von Saugerkopf und Sammelbehälter geschlossen. Wenn der Saugerkopf und der Sammelbehälter durch eine Klappverbindung miteinander verbunden sind, kann der Saugerkopf zugeklappt und dadurch in Eingriff mit dem Sammelbehälter gebracht werden. Das Schließen der Saugverbindung kann auch dadurch erfolgen, dass der Saugerkopf auf den Sammelbehälter aufgesetzt wird (vgl. Fig. 3). Mit anderen Worten ist es im Sinne der Erfindung bevorzugt, dass die Staubsaugvorrichtung geschlossen wird, indem der Saugerkopf auf den Sammelbehälter aufgesetzt wird. Es kann auch bevorzugt sein, dass die Staubsaugvorrichtung zum Schließen zugeklappt wird. Die Öffnungen oder Löcher werden durch das Zusammenführen oder Zusammenwirken des Stempels und der Matrize der Stanzvorrichtung in den Entsorgungsbeutel eingebracht.

Die für die Stanzvorrichtung eingeführten Begriffe, Definitionen und technischen Vorteile gelten vorzugsweise für die Staubsaugvorrichtung und das vorgeschlagene Verfahren analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Seitenansicht einer bevorzugten Ausgestaltung der Stanzvorrichtung
- Fig. 2: Schrägansichten verschiedener bevorzugter Ausgestaltungen von Stempel und Matrize
- Fig. 3: Seitenansicht einer bevorzugten Ausgestaltung der Staubsaugvorrichtung im offenen Zustand
- Fig. 4: Seitenansicht einer bevorzugten Ausgestaltung der Staubsaugvorrichtung im geschlossenen Zustand (Betriebszustand der Staubsaugvorrichtung)

### Ausführungsbeispiele:

Figur 1 zeigt eine bevorzugte Ausgestaltung einer vorgeschlagenen Stanzvorrichtung (1). Insbesondere zeigt Fig. 1 eine Seitenansicht eines Stempels (6) und einer Matrize (7), die gemeinsam eine Stanzvorrichtung (1) im Sinne der Erfindung bilden. Stempel (6) und Matrize (7) sind vorzugsweise zueinander korrespondierend ausgebildet und weisen jeweils einen Hohlzylinder (10, 11) als Grundform auf. Der Begriff «zueinander korrespondierend» bedeutet im Sinne der Erfindung bevorzugt, dass der Stempel (6) in die Matrize (7) eingeführt werden kann, da der Stempel (6) ein wenig kleiner ist als die Matrize (7). Vorzugsweise sind Stempel (6) und Matrize (7) aufeinander abstimmt ausgebildet; sie werden im Sinne der Erfindung vorzugsweise auch als «zueinander ausgestaltete Komponenten» der Stanzvorrichtung (1) bezeichnet; sie werden im Sinne der Erfindung vorzugsweise auch als «zueinander ausgestaltete Komponenten» der Stanzvorrichtung (1) bezeichnet. Die Hohlzylinder (10, 11), die vorzugsweise den Stempel (6) und die Matrize (7) bilden, weisen bevorzugt eine rechteckige Grundfläche auf und sind von der Größe her so aufeinander abgestimmt, dass der Stempel (6) in die Matrize (7) einfahren kann. Mit anderen Worten ist es möglich, dass der Hohlzylinder (10), der den Stempel (6) bildet, etwas kleiner ausgebildet ist als der Hohlzylinder (11), der die Matrize (7) der Stanzvorrichtung (1) bildet. Insbesondere weist der Matrizen-Hohlzylinder (11) etwas längere Seitenkanten auf, so dass der Stempel (6) beim Schließen der Staubsaugvorrichtung (3) in die Matrize (7) eingeführt werden kann. Der Stempel (6) der Stanzvorrichtung (1) liegt am Saugerkopf (4) der Staubsaugvorrichtung (3) angeordnet vor, während die Matrize (7) Bestandteil des Unterteils der Staubsaugvorrichtung (3) ist. Vorzugsweise umfasst das Unterteil insbesondere den Staubsammelbehälter (5) der Staubsaugvorrichtung (3). Es kann im Sinne der Erfindung auch bevorzugt sein, dass der Stempel (6) und/oder die Matrize (7) bzw. die Hohlzylinder (10, 11), von denen sie gebildet werden, eine halbkreisförmige, elliptische, ovale oder andersförmige Grundfläche aufweisen.

Der Hohlzylinder (10), der den Stempel (6) bildet, kann in seinem unteren Bereich keilförmig (15) ausgebildet sein. Das bedeutet im Sinne Erfindung bevorzugt, dass der Hohlzylinder (10) auf einer Seite länger ausgebildet ist als auf einer gegenüberliegenden Seite. Vorzugsweise weist der Hohlzylinder (10) auf seiner längeren Seite einen tiefsten Punkt auf, der die Spitze des Keils (15) bildet. Vorzugsweise kann dieser tiefste Punkt entweder auf der Vorderseite (13) oder auf der Rückseite (14) des Hohlzylinders (10) angeordnet liegen. Entsprechende Ausgestaltungen des Stempels (6) sind in den Fig. 2a und 2b dargestellt. Durch die Spitze bzw. den tiefsten Punkt des Keils (15) kann der Stempel (6) das Material des Entsorgungsbeutels (2) durchstechen und auf diese Weise die Druckausgleichs-Öffnung erzeugen.

Wenn ein frischer Entsorgungsbeutel (2) in den Staubsammelbehälter (5) der Staubsaugvorrichtung (3) eingelegt werden soll, so wird der Entsorgungsbeutel (2) über den Rand des Staubsammelbehälters (5) gelegt. Die Staubsaugvorrichtung (3) befindet sich beim Einlegen des Entsorgungsbeutels (2) im offenen Zustand, wie in Fig. 3 dargestellt. Wenn die Staubsaugvorrichtung (3) geschlossen wird, bewegt sich der Stempel (6) nach unten und fährt in die Matrize (7) ein. Dadurch wird im Material des Entsorgungsbeutels (2) ein Loch bzw. eine Öffnung erzeugt, durch die bei Betrieb der Staubsaugvorrichtung (3) ein Druckausgleich zwischen dem ersten Bereich (8) und dem zweiten Bereich (9) im Sammelbehälter (5) der Staubsaugvorrichtung (3) erfolgen kann.

Fig. 2 zeigt Schrägansichten verschiedener bevorzugter Ausgestaltungen von Stempel (6) und Matrize (7). Der Stempel (6) kann aus einem Hohlzylinder (10) bestehen, der auf seiner Vorderseite (13) eine Öffnung (12) aufweist. Die Öffnung (12) kann durchgehend (vgl. Fig. 2a) oder nicht-durchgehend (vgl. Fig. 2b) ausgebildet sein. Sie kann von einem Spalt gebildet werden (vgl. Fig. 2a) oder eine andere Form aufweisen (vgl. Fig. 2b). Vorzugsweise trägt die Öffnung (12) auf der Vorderseite (13) des Stempels (6) zusammen mit der offenen Seite des Hohlzylinders (11), der die Matrize (7) bildet, zur offenen Struktur der Stanzvorrichtung (1) bei. Die offene Struktur der Stanzvorrichtung (1) ermöglicht den Druckausgleich zwischen dem ersten Bereich (8) und dem zweiten Bereich (9) im Sammelbehälter (5) der Staubsaugvorrichtung (3), der in Fig. 4 von den gestrichelten Pfeilen angedeutet wird. Insbesondere wird durch die offene Struktur der Stanzvorrichtung (1) eine fluidwirksame Verbindung zwischen den unterschiedlichen Druckbereichen (8, 9) geschaffen, die bei Betrieb des Saugers (3) entstehen. Dabei stehen sich insbesondere ein Unterdruck im zweiten Bereich (9) und ein Atmosphärendruck im ersten Bereich (8) des Sammelbehälters (5) gegenüber.

Der Hohlzylinder (10), der den Stempel (6) bildet, kann keilförmig (15) ausgebildet sein, wobei der Keil (15) auf der Vorderseite (13) (vgl. Fig. 2b) oder auf der Rückseite (14) des Stempels (6) (vgl. Fig. 2a) angeordnet vorliegen kann. Die Unterkanten des Keils (15) bzw. des Hohlzylinders (10), der den Stempel (6) bildet, können gerade (vgl. Fig. 2a) oder gebogen (vgl. Fig. 2b) ausgebildet sein. Es ist im Sinne der Erfindung bevorzugt, dass die Unterkanten des Keils (15) bzw. des Stempels (6) geschärft sind, so dass sie das Material des Entsorgungsbeutels (2) besonders einfach und unkompliziert durchtrennen.

Der Hohlzylinder (11), der die Matrize (7) bildet, kann an drei Seiten geschlossen ausgebildet sein und eine offene Seite aufweisen. Bei dieser offenen Seite kann es sich vorzugsweise um die Vorderseite (13) der Matrize (7) handeln. Die Vorderseite (13) der Matrize (7) ist im geschlossenen Zustand vorzugsweise dem Innenraum des Sammelbehälters (5) der Staubsaugvorrichtung (3) zugewandt, während die Rückseite (14) der Matrize (7) an einer Innenseite einer Seitenwand des Sammelbehälters (5) der Staubsaugvorrichtung (3) befestigt vorliegt.

Fig. 3 zeigt eine Seitenansicht einer bevorzugten Ausgestaltung der Staubsaugvorrichtung (3) im offenen Zustand. Im offenen Zustand der Staubsaugvorrichtung (3) liegen der Saugerkopf (4) und der Sammelbehälter (5) der Staubsaugvorrichtung (3) getrennt voneinander vor. Wenn der Saugerkopf (4) klappbar an dem Sammelbehälter (5) befestigt ist, kann im offenen Zustand der Staubsaugvorrichtung (3) eine Klappverbindung zwischen dem Saugerkopf (4) und dem Sammelbehälter (5) bestehen, die beispielsweise von einem Klappgelenk oder einem Scharnier gebildet wird. In anderen Ausgestaltungen kann der Saugerkopf (4) einfach vom Staubsammelbehälter (5) abgehoben oder abgenommen werden. Die vorgeschlagene Stanzvorrichtung (1) ist vorzugsweise zumindest zweiteilig ausgebildet, wobei sie zumindest einen Stempel (6) und eine Matrize (7) umfasst. Der Stempel (6) liegt in dem Saugerkopf (4) und die Matrize (7) in oder an dem Sammelbehälter (5) der Staubsaugvorrichtung (3) befestigt angeordnet vor. Im offenen Zustand der Staubsaugvorrichtung (3) kann der Entsorgungsbeutel (2) in den Sammelbehälter (5) eingelegt werden. Insbesondere wird ein Teilbereich des Entsorgungsbeutels (2) über den Rand des Sammelbehälters gelegt, um den Entsorgungsbeutel (2) zu befestigen bzw. zu fixieren. Durch das Einlegen des Entsorgungsbeutels (2) werden im Sammelbehälter (5) der Staubsaugvorrichtung (3) unterschiedliche Raumbereiche (8, 9) geschaffen, die bei Betrieb der Saugvorrichtung (3) unterschiedlichen Druckbereichen entsprechen. Es ist im Sinne der Erfindung insbesondere bevorzugt, dass im ersten Bereich (8) im Sammelbehälter (5) der Umgebungsdruck der Saugvorrichtung (3) vorliegt, während im zweiten Bereich (9) des Sammelbehälters (5) ein Unterdruck vorliegt, der bei Betrieb der Staubsaugvorrichtung (3) von der Turbine der Staubsaugvorrichtung (3) erzeugt wird und mit dem das Saugmedium in die Saugvorrichtung (3) eingesaugt wird. Vorzugsweise entspricht der zweite Bereich dem Innenraum des Entsorgungsbeutels (2), während der erste Bereich (8) zwischen der Außenseite des Entsorgungsbeutels (2) und einer Innenseite des Sammelbehälters (5) gebildet wird.

Fig. 4 zeigt eine Seitenansicht einer bevorzugten Ausgestaltung der Staubsaugvorrichtung (3) im geschlossenen Zustand, wobei der geschlossene Zustand dem Betriebszustand der Staubsaugvorrichtung (3) entspricht. Im geschlossenen Zustand der Staubsaugvorrichtung (3) liegt der Saugerkopf (4) auf dem Sammelbehälter (5) vor. Beim Schließen der Staubsaugvorrichtung (3) werden der Saugerkopf (4) und der Sammelbehälter (5) aufeinander zu bewegt, wodurch der Stempel (6) der Stanzvorrichtung (1) in die Matrize (7) eingeführt wird. Auf der Matrize (7) liegt zunächst der intakte Standard-Entsorgungsbeutel (2) auf, der beim Schließen der Saugvorrichtung (3) vom Stempel (6) der Stanzvorrichtung (1) durchstochen bzw. durchstoßen wird, wodurch eine Öffnung im Entsorgungsbeutel (2) erzeugt wird. Vorzugsweise entspricht die Anzahl der erzeugten Öffnungen der Anzahl der vorhandenen Stanzvorrichtungen (1). Wenn beispielsweise zwei Stanzvorrichtungen (1) an der Saugvorrichtung (3) vorhanden sind, ist es im Sinne der Erfindung bevorzugt, dass zwei Öffnungen zum Druckausgleich erzeugt werden. Der Druckausgleich erfolgt vorzugsweise zwischen dem ersten Bereich (8) und dem zweiten Bereich (9) des Sammelbehälters. Er wird in Fig. 4 durch den gestrichelten Pfeil angedeutet, der vom ersten Bereich (8) zum zweiten Bereich (9) weist. Die Pfeilrichtung deutet an, dass der Druckausgleich dadurch erfolgt, dass ein Fluid vom ersten Bereich (8) in den zweiten Bereich (9) gelangt. Eine fluidwirksame Verbindung zwischen den beiden Bereichen (8, 9) wird vorteilhafterweise durch die offene Struktur der Stanzvorrichtung (1) bereitgestellt, die insbesondere von der Öffnung (12) auf einer Vorderseite (13) des Stempels (6) und einer offenen Seite in dem Hohlzylindern (11) gebildet wird, der die Matrize (7) der Stanzvorrichtung (1) bildet. Es ist im Sinne der Erfindung ganz besonders bevorzugt, dass der Druckausgleich zwischen dem ersten Bereich (8) und dem zweiten Bereich (9) dadurch erfolgt, dass ein Fluid, beispielsweise ein Gasgemisch, insbesondere Luft, aus dem ersten Bereich (8) in den zweiten Bereich (9) gelangt. Die Richtung der Gas- bzw. Luftströmung, die vorzugsweise den Druckausgleich bewirkt, ergibt sich aus dem Druckgefälle, das zwischen erstem Bereich (8) und zweitem Bereich (9) besteht. Insbesondere liegt bei Betrieb der Saugvorrichtung (3) zwischen den Seitenwänden des Sammelbehälters und dem Entsorgungsbeutel (2) ein Atmosphärendruck vor, während im Innenraum des Entsorgungsbeutels (2) ein Unterdruck vorliegt. Während des Betriebs der Saugvorrichtung (3) kann sich im Entsorgungsbeutel (2) Staub ansammeln. Dieser Staub wird in Fig. 4 durch den gepunkteten, grauen Bereich symbolisiert.

### Bezugszeichenliste

- 1: Stanzvorrichtung
- 2: Entsorgungsbeutel
- 3: Staubsaugvorrichtung
- 4: Saugerkopf
- 5: Sammelbehälter
- 6: Stempel
- 7: Matrize
- 8: Erster Bereich
- 9: Zweiter Bereich
- 10: Hohlzylinder, der den Stempel bildet
- 11: Hohlzylinder, der die Matrize bildet
- 12: Öffnung
- 13: Vorderseite von Stempel oder Matrize
- 14: Rückseite von Stempel oder Matrize
- 15: Keil

## Patentansprüche

1. Vorrichtung (1) zum Einbringen von Öffnungen in einen Entsorgungsbeutel (2) für eine Staubsaugvorrichtung (3), wobei die Staubsaugvorrichtung (3) einen Saugerkopf (4) und einen Sammelbehälter (5) aufweist,
**dadurch gekennzeichnet, dass**
die Vorrichtung (1) zueinander korrespondierend ausgestaltete Komponenten (6, 7) umfasst, wobei die zueinander korrespondierend ausgestalteten Komponenten (6, 7) der Vorrichtung (1) eine offene Struktur umfassen, wobei die offene Struktur dazu eingerichtet ist, einen Druckausgleich zwischen einem ersten Bereich (8) und einem zweiten Bereich (9) des Sammelbehälters (5) zu bewirken.

2. Vorrichtung (1) nach Anspruch 1
**dadurch gekennzeichnet, dass**
die Vorrichtung (1) einen Stempel (6) und eine Matrize (7) als zueinander korrespondierend ausgestaltete Komponenten umfasst, wobei der Stempel (6) in dem Saugerkopf (4) und die Matrize (7) in dem Sammelbehälter (5) angeordnet vorliegt.

3. Vorrichtung (1) nach Anspruch 2
**dadurch gekennzeichnet, dass**
der erste Bereich (8) zwischen einer Wand des Sammelbehälters (5) und dem Entsorgungsbeutel (2) gebildet wird und der zweite Bereich (9) dem Innenraum des Entsorgungsbeutels (2) entspricht.

4. Vorrichtung (1) nach Anspruch 2 oder 3
**dadurch gekennzeichnet, dass.**
bei Betrieb der Saugvorrichtung (3) in dem ersten Bereich (8) ein Atmosphärendruck vorliegt und in dem zweiten Bereich (9) ein Unterdruck.

5. Vorrichtung (1) nach einem der vorhergehenden Ansprüche
**dadurch gekennzeichnet, dass**
die Vorrichtung (1) dazu eingerichtet ist, beim Aufsetzen des Saugerkopfes (4) auf den Sammelbehälter (5) Öffnungen in den Entsorgungsbeutel (2) einzubringen.

6. Vorrichtung (1) nach einem der vorhergehenden Ansprüche
**dadurch gekennzeichnet, dass**
der Stempel (6) eine rechteckige Grundform aufweist.

7. Vorrichtung (1) nach einem der vorhergehenden Ansprüche
**dadurch gekennzeichnet, dass**
der Stempel (6) von einem Hohlzylinder (10) gebildet wird, der in einem unteren Bereich keilförmig (15) ausgebildet ist.

8. Vorrichtung (1) nach einem der vorhergehenden Ansprüche
**dadurch gekennzeichnet, dass**
der Stempel (6) in einem unteren Bereich geschärfte Kanten aufweist.

9. Vorrichtung (1) nach einem der vorhergehenden Ansprüche
**dadurch gekennzeichnet, dass**
die Matrize (7) eine rechteckige Grundform aufweist.

10. Vorrichtung (1) nach einem der vorhergehenden Ansprüche
**dadurch gekennzeichnet, dass**
die Matrize (7) von einem Hohlzylinder (11) gebildet wird, der auf einer der vier Seiten offen ist.

11. Vorrichtung (1) nach einem der vorhergehenden Ansprüche
**dadurch gekennzeichnet, dass**
der Stempel (6) eine Öffnung (12) aufweist.

12. Staubsaugvorrichtung (3)
**dadurch gekennzeichnet, dass**
die Staubsaugvorrichtung (3) mindestens eine Vorrichtung (1) nach einem der vorhergehenden Ansprüche umfasst.

13. Verfahren zum Einbringen von Öffnungen in einen Entsorgungsbeutel (2) für eine Staubsaugvorrichtung (3),
**umfassend die folgenden Schritte:**
a) Bereitstellung einer Staubsaugvorrichtung (3), wobei die Staubsaugvorrichtung (3) einen Saugerkopf (4) und einen Sammelbehälter (5) aufweist, sowie eine Vorrichtung (1) nach einem der Ansprüche 1 bis 11,
b) Einlegen eines Entsorgungsbeutels (2) in den Sammelbehälter (5) der Staubsaugvorrichtung (3),
c) Schließen der Staubsaugvorrichtung (3),
d) Einbringen der Öffnungen in den Entsorgungsbeutel (2) durch Zusammenführen des Stempels (6) und der Matrize (7).

## Claims

1. Device (1) for introducing openings into a disposal bag (2) for a vacuuming device (3), wherein the vacuuming device (3) has a suction head (4) and a collecting tank (5),
**characterized in that**
the device (1) comprises components (6, 7) that are configured in a manner corresponding to one another, wherein the components (6, 7) of the device (1) that are configured in a manner corresponding to one another comprise an open structure, wherein the open structure is designed to effect pressure equalization between a first region (8) and a second region (9) of the collecting tank (5).

2. Device (1) according to Claim 1,
**characterized in that**
the device (1) comprises a punch (6) and a die (7) as components that are configured in a manner corresponding to one another, wherein the punch (6) is arranged in the suction head (4) and the die (7) is arranged in the collecting tank (5).

3. Device (1) according to Claim 2,
**characterized in that**
the first region (8) is formed between a wall of the collecting tank (5) and the disposal bag (2) and the second region (9) corresponds to the interior of the disposal bag (2).

4. Device (1) according to Claim 2 or 3,
**characterized in that**
atmospheric pressure prevails in the first region (8) and a negative pressure prevails in the second region (9) during operation of the vacuuming device (3).

5. Device (1) according to one of the preceding claims,
**characterized in that**
the device (1) is designed to introduce openings into the disposal bag (2) when the suction head (4) is fitted on the collecting tank (5).

6. Device (1) according to one of the preceding claims,
**characterized in that**
the punch (6) has a rectangular basic shape.

7. Device (1) according to one of the preceding claims,
**characterized in that**
the punch (6) is formed by a hollow cylinder (10) that is formed in the shape of a wedge (15) in a lower region.

8. Device (1) according to one of the preceding claims,
**characterized in that**
the punch (6) has sharpened edges in a lower region.

9. Device (1) according to one of the preceding claims,
**characterized in that**
the die (7) has a rectangular basic shape.

10. Device (1) according to one of the preceding claims,
**characterized in that**
the die (7) is formed by a hollow cylinder (11) that is open on one of its four sides.

11. Device (1) according to one of the preceding claims,
**characterized in that**
the punch (6) has an opening (12).

12. Vacuuming device (3),
**characterized in that**
the vacuuming device (3) comprises at least one device (1) according to one of the preceding claims.

13. Method for introducing openings into a disposal bag (2) for a vacuuming device (3),
**comprising the following steps:**
a) providing a vacuuming device (3), wherein the vacuuming device (3) has a suction head (4) and a collecting tank (5), and a device (1) according to one of Claims 1 to 11,
b) inserting a disposal bag (2) into the collecting tank (5) of the vacuuming device (3),
c) closing the vacuuming device (3),
d) introducing the openings into the disposal bag (2) by moving the punch (6) and the die (7) together.

## Revendications

1. Dispositif (1) permettant de pratiquer des ouvertures dans un sac à déchets (2) pour un dispositif aspirateur (3), dans lequel le dispositif aspirateur (3) présente une tête d'aspiration (4) et un récipient de collecte (5),
**caractérisé en ce que**
le dispositif (1) comprend des composants (6, 7) configurés de manière mutuellement correspondante, dans lequel les composants (6, 7) configurés de manière mutuellement correspondante du dispositif (1) comprennent une structure ouverte, la structure ouverte étant conçue pour provoquer une égalisation de la pression entre une première zone (8) et une deuxième zone (9) du récipient de collecte (5).

2. Dispositif (1) selon la revendication 1,
**caractérisé en ce que**
le dispositif (1) comprend un poinçon (6) et une matrice (7) comme composants configurés de manière mutuellement correspondante, dans lequel le poinçon (6) est présent en étant disposé dans la tête d'aspiration (4) et la matrice (7) est présente en étant disposée dans le récipient de collecte (5).

3. Dispositif (1) selon la revendication 2,
**caractérisé en ce que**
la première zone (8) est formée entre une paroi du récipient de collecte (5) et le sac à déchets (2), et la deuxième zone (9) correspond à l'intérieur du sac à déchets (2).

4. Dispositif (1) selon la revendication 2 ou 3,
**caractérisé en ce**
**qu'**en cours de fonctionnement du dispositif aspirateur (3), une pression atmosphérique règne dans la première zone (8) et une dépression règne dans la deuxième zone (9).

5. Dispositif (1) selon l'une quelconque des revendications précédentes,
**caractérisé en ce que**
le dispositif (1) est conçu pour pratiquer des ouvertures dans le sac à déchets (2) lorsque la tête d'aspiration (4) est posée sur le récipient de collecte (5).

6. Dispositif (1) selon l'une quelconque des revendications précédentes,
**caractérisé en ce que**
le poinçon (6) présente une forme de base rectangulaire.

7. Dispositif (1) selon l'une quelconque des revendications précédentes,
**caractérisé en ce que**
le poinçon (6) est formé par un cylindre creux (10) qui est réalisé de manière conique (15) dans une zone inférieure.

8. Dispositif (1) selon l'une quelconque des revendications précédentes,
**caractérisé en ce que**
le poinçon (6) présente des arêtes aiguisées dans une zone inférieure.

9. Dispositif (1) selon l'une quelconque des revendications précédentes,
**caractérisé en ce que**
la matrice (7) présente une forme de base rectangulaire.

10. Dispositif (1) selon l'une quelconque des revendications précédentes,
**caractérisé en ce que**
la matrice (7) est formée par un cylindre creux (11) qui est ouvert sur l'un des quatre côtés.

11. Dispositif (1) selon l'une quelconque des revendications précédentes,
**caractérisé en ce que**
le poinçon (6) présente une ouverture (12).

12. Dispositif aspirateur (3),
**caractérisé en ce que**
le dispositif aspirateur (3) comprend au moins un dispositif (1) selon l'une quelconque des revendications précédentes.

13. Procédé permettant de pratiquer des ouvertures dans un sac à déchets (2) pour un dispositif aspirateur (3),
comprenant les étapes suivantes consistant à :
a) fournir un dispositif aspirateur (3), dans lequel le dispositif aspirateur (3) présente une tête d'aspiration (4) et un récipient de collecte (5) ainsi qu'un dispositif (1) selon l'une quelconque des revendications 1 à 11,
b) insérer un sac à déchets (2) dans le récipient de collecte (5) du dispositif aspirateur (3),
c) fermer le dispositif aspirateur (3),
d) pratiquer des ouvertures dans le sac à déchets (2) en réunissant le poinçon (6) et la matrice (7).
